Europäisches Patentamt

European Patent Office

Office européen des brevets

(11) Veröffentlichungsnummer : **0 188 219**
B1

# (12) EUROPÄISCHE PATENTSCHRIFT

(45) Veröffentlichungstag der Patentschrift :
27.07.88

(21) Anmeldenummer : 86100146.9

(22) Anmeldetag : 08.01.86

(51) Int. Cl.⁴ : **B 29 C 67/22,** B 29 C 33/58 //
B29K105:04, B29K75:00

(54) Verfahren zur Herstellung von Gegenständen aus Polyurethanschaum.

(30) Priorität : 17.01.85 DE 3501424

(43) Veröffentlichungstag der Anmeldung :
23.07.86 Patentblatt 86/30

(45) Bekanntmachung des Hinweises auf die Patenterteilung : 27.07.88 Patentblatt 88/30

(84) Benannte Vertragsstaaten :
DE FR GB IT

(56) Entgegenhaltungen :
EP-A- 0 018 528
DE-A- 2 620 708
DE-A- 2 630 846
US-A- 4 399 088

(73) Patentinhaber : Teroson GmbH
Hans-Bunte-Strasse 4
D-6900 Heidelberg 1 (DE)

(72) Erfinder : Fischer, Wolfgang, Dr.
Hellklingerstrasse 31
D-6942 Mörlenbach (DE)

(74) Vertreter : UEXKÜLL & STOLBERG Patentanwälte
Beselerstrasse 4
D-2000 Hamburg 52 (DE)

EP 0 188 219 B1

## Beschreibung

Die Erfindung betrifft ein Verfahren zur Herstellung von Gegenständen aus Polyurethanschaum, bei dem der Gegenstand in herkömmlicher Weise durch Schäumen in einer Form hergestellt und die Form vor der Beschickung mit den schaumbildenden Komponenten mit einem Trennmittel behandelt wird. ·

Die Herstellung von Gegenständen aus Polyurethanschaum erfolgt in Formen und kann nach den verschiedensten, aus dem Stand der Technik bekannten Verfahren erfolgen. Sowohl hinsichtlich der dabei einzusetzenden, den Schaum bildenden Komponenten als auch hinsichtlich der einzusetzenden Vorrichtungen und Formwerkzeuge gibt es eine große Vielfalt von Variationsmöglichkeiten, die dem Fachmann geläufig sind. In der Regel erfolgt die Beschickung der Form entweder im offenen oder geschlossenen Zustand durch einen Einschußkanal mit den über einen Mischkopf vermengten Polyol- und Isocyanat-Komponenten. Neben dem angestrebten Produkt und dessen gewünschten Eigenschaften richtet sich die Zusammensetzung der Komponenten danach, ob nach dem Einstufenverfahren (Direktverfahren) oder nach dem Zweistufenverfahren (Präpolymerverfahren oder Semipräpolymerverfahren) gearbeitet wird. Alle diese verschiedenen möglichen Verfahrensweisen sind in der Literatur ausführlich beschrieben, so daß sich ein detailliertes Eingehen darauf erübrigt. Es sei hierzu beispielsweise auf « Integralschaumstoffe », Piechota und Röhr, 1975 ; Kunststoff-Handbuch, Band VII, « Polyurethane », 1966 ; « Schaumkunststoffe », herausgegeben vom Fachverband Schaumkunststoffe in GKV, 1976 und Wittfoht, Kunststoff-Technisches Wörterbuch, Teil 3, verwiesen.

Zwecks leichter und sauberer Entnahme der in den aus Metall, Holz oder Kunststoff bestehenden Formen auspolymerisierten Schaumgegenstände werden die mit den schaumbildenden Komponenten bzw. dem Polyurethanschaum in Kontakt tretenden Formoberflächen vor der Beschickung der Form mit Trennmitteln (Formtrennmittel) behandelt. Zu diesem Zweck werden die Werkzeugoberflächen unter Erzeugung eines Trennfilms mit einer gleichmäßigen Beschichtung durch ein Trennmittel versehen. Dies geschieht üblicherweise nach den bekannten spritz- und sprühtechnischen Verfahren, wobei das Trennmittel entweder durch hohen Materialdruck oder zusätzliche Druckkraft zerstäubt wird. Neben guten Entformungseigenschaften muß das Trennmittel in speziellen Fällen darüber hinaus einen Einfluß hinsichtlich der Oberflächenbeschaffenheit des fertigen Polyurethanschaumgegenstandes ausüben können. So werden durch bestimmte Zusätze, beispielsweise auf dem Kaltweichschaumsektor (Sitze, Nackenstützen, Armlehnen usw. in Autos) Offenzelligkeit und dadurch die geforderte « Atmungsfähigkeit » des Schaumgegenstandes erzeugt.

Herkömmliche Trennmittel bestehen aus organischen Lösungsmitteln und darin gelösten, dispergierten, suspendierten oder emulgierten trennwirksamen Substanzen, die in ihrer Gesamtheit als Festkörper bezeichnet werden. Dieser kann, wie dem Fachmann geläufig, Wachse, Fette, Silikonverbindungen, Weichmacher, Stabilisatoren, Beschleuniger usw. enthalten. Die im Trennmittel überwiegend vorhandenen Lösungsmittel wie beispielsweise Frigen, Methylenchlorid, Trichlorethan, Perchlorethylen, Benzine und hochsiedende Benzinkohlenwasserstoffe dienen als Träger, um die trennwirksamen Substanzen als gleichmäßigen Trennfilm auf die Werkzeugoberflächen aufzubringen.

Festkörperzusammensetzung, Festkörperanteil und Lösungsmittelkombination werden in Abhängigkeit von der Formentemperatur, der Ablüftezeit (Zeit vom Trennmittelauftrag bis zum Komponenteneintrag) und jeweiligen Schaumsystem (Integral-, Hartintegral-, Kaltweichschaum) konzipiert. Auf diese Weise können die verschiedensten Gegenstände mit sehr unterschiedlichen Eigenschaften hergestellt werden. So wird beispielsweise Integralschaum zur Herstellung von Lenkrädern für Automobile verwendet, wobei spezielle Anforderungen an die Oberfläche (Gleichmäßigkeit und gute Griffeigenschaften) gestellt werden. Die Formtemperatur liegt bei der Herstellung von Integralschaum in der Regel zwischen 30 und 50 °C. Demgegenüber liegt die Temperatur des Formwerkzeugs beim RIM-Verfahren (RIM-Schaum), das häufig zur Herstellung von polierten Formteilen verwendet wird, bei 50 bis 70 °C. Ähnliche Temperaturen, nämlich im Bereich von 40 bis 70 °C, weisen die Formwerkzeuge bei der Herstellung von Gegenständen als Kaltweichschaum, wie Sitzen, Kopfstützen und Armlehnen für Automobile auf. Bei der Herstellung von Gegenständen aus Hartschaum wie Konsolen für Automobile, Fensterläden, Kühlschrankelementen, Möbelteilen und Stühlen beträgt die Temperatur in der Regel 30 bis 50 °C.

Beim Trennmitteleintrag, der in dem meisten Fällen mittels einer Spritz- bzw. Sprühvorrichtung erfolgt, verdampfen die Lösungsmittel weitgehend als azeotropes Gemisch von der je nach vorliegemden Schaumsystem zwischen 25 und 70 °C erwärmten Werkzeugoberfläche. Gemeinsam mit dem Overspray werden diese Dämpfe über entsprechende Absauganlagen aus dem Arbeitsfeld entfernt. Abgesehen vom Verlust wertvoller Rohstoffe ist in diesen Schadstoffemissionen eine bedeutende Umweltbelastung zu sehen. Recycling-Verfahren wären mit Adsorptionsanlagen denkbar, jedoch stellen hier die in fein verteilter Form vorliegenden Feststoffanteile, die weder über Filter noch Wasserwände eliminiert werden können, ein großes Problem dar. Die sofort mit einer aus Wachs und Fett belegten Adsorptionsschichten müßten in kürzesten Zeitabständen regeneriert werden, was einen enormen arbeitsmäßigen und finanziellen Aufwand bedeutet.

Aufgrund der geschilderten Probleme wird schon seit geraumer Zeit angestrebt, Trennmittelkonzentrate mit geringen Lösungsmittelanteilen sowie Trennmittel auf wässriger Basis einzusetzen, d. h. Trennmittel, bei denen organische Lösungsmittel weitgehend und vorzugsweise vollständig durch Wasser ersetzt sind. Während das Versprühen von Trennmittelkonzentraten wegen deren hohen Viskositäten Schwierigkeiten bereitet, besteht bei den Trennmitteln auf wässriger Basis das Problem, daß nach dem Trennmittelauftrag die Beschickung der Form mit den schaumbildenden Komponenten erst dann erfolgen kann, wenn das· Lösungsmittel, also hier das Wasser abgedunstet ist, damit der Polymerisations- und Schäumungsvorgang nicht störend beeinflußt wird. Diese als Ablüftezeiten bekannten Verdunstungsphasen werden durch die Taktzeiten der Schaumanlagen vorgegeben und liegen im Mittel zwischen 20 und 60 Sek. Während für die Ablüftung von Trennmitteln auf organischer Lösungsmittelbasis auch kürzere Zeiten ausreichend sind, treten bei der Verwendung von Trennmitteln auf wässriger Basis in diesen Bereichen erhebliche Schwierigkeiten auf, die im wesentlichen durch das Abdunstverhalten des Wassers bedingt sind, d. h. das Wasser verdunstet nicht schnell genug.

Es ist bekannt, daß man auf einigen wenigen Gebieten (Heißschaum, modifizierter Integralschaum bei ·Hinterschäumungsprozessen) bereits wässrige Trennmittel eingesetzt hat. Hierbei handelt es sich um Wachsdispersionen oder-emulsionen, deren Verwendung bisher jedoch großen Einschränkungen hinsichtlich der Oberflächenbeschaffenheit der Schaumgegenstände unterlegen hat. Darüber hinaus sind bei den oben beschriebenen Schaumherstellungsverfahren und den dabei angewandten Formtemperaturen erhebliche Ablüftezeiten erforderlich, die einen Einsatz bei der industriellen Massenproduktion (s. die oben angegebenen Taktzeiten) unter wirtschaftlichen Gesichtspunkten uninteressant machen.

Der Grund dafür, das unzureichendes Abdunsten des Wassers bei Verwendung wässriger Trennmittel zu Produkten geringerer Qualität führt, besteht in der parallel zur Polyol-Isocyanat-Reaktion ablaufenden Konkurrenzreaktion zwischen Wasser und Isocyanatgruppen $(R—N=C=O + H_2O \rightarrow R—NH_2 + CO_2)$, die Kohlendioxid freisetzt und das genau abgestimmte Polyol/Isocyanat-Verhältnis partiell verschiebt. Dies führt zu Schaumstörungen in Form von Verfärbungen über Blasen, Lunkerbildungen (Gaseinflüsse) bis hin zum teilweisen Schaumkollaps.

Zur Vermeidung dieser als Folge des schlechten Abdunstverhaltens von wässrigen Trennmitteln auftretenden Nachteile hat man auch schon wässrige Trennmittel eingesetzt, die neben Wasser wesentliche Anteile an niedrig siedenden wasserlöslichen Alkoholen, Ketonen, Estern usw. als Verdunstungsbeschleuniger enthalten. Diese Komponenten führen zwar zu einer gewissen Verkürzung der zu langen Abdunstzeiten wässriger Trennmittel, dies reicht jedoch nicht aus, um die oben beschriebene Reaktion zwischen Wasser und Isocyanat zu vermeiden. Außerdem führen diese wasserlöslichen Verdunstungsbeschleuniger nach wie vor zu einer erheblichen Umweltbelastung (s. oben).

In der Praxis haben sich wässrige Trennmittel der oben beschriebenen Art, die in der Regel wesentliche Bestandteile an Lösungsvermittlern enthalten, aufgrund der geschilderten Nachteile bisher nicht durchsetzen können.

Der Erfindung liegt dementsprechend die Aufgabe zugrunde, ein Verfahren zur Herstellung von Gegenständen aus Polyurethanschaum zu entwickeln, das einerseits den Einsatz von wässrigen Trennmitteln oder organische Lösungsmittel enthaltenden Trennmittelkonzentraten gestattet und damit die mit organischen Lösungsmitteln verbundene Umweltbelastung stark verringert oder ganz vermeidet und andererseits die mit dem schlechten Abdunstverhalten wässriger Trennmittel und der hohen Viskosität von organische Lösungsmittel enthaltenden Trennmittelkonzentraten verbundenen Nachteile vermeidet.

Zur Lösung dieser Aufgabe wird ein Verfahren zur Herstellung von Gegenständen aus Polyurethanschaum der eingangs genannten Art vorgeschlagen, das dadurch gekennzeichnet ist, daß man ein wässriges Trennmittel oder ein organische Lösungsmittel enthaltendes Trennmittelkonzentrat verwendet und dieses in an sich herkömmlicher Weise durch Zerstäuben aber unter Zuhilfenahme von heißen, unter Druck stehenden Gasen, insbesondere heißer Druckluft aufbringt.

Der Trennmittelauftrag, d. h. die Zerstäubung des Trennmittels sowie die Regulierung des Sprühnebels, erfolgt nach den bereits oben erwähnten spritz- und sprühtechnischen Verfahren, wobei das Trennmittel entweder durch hohen Materialdruck oder zusätzliche Druckluft zerstäubt wird. Als Zerstäubungsaggregat sind Spritz- oder Sprühvorrichtungen wie Sprühpistolen geeignet, die nach dem Grundprinzip der Luftzerstäubung arbeiten. Besonders geeignet für die Durchführung des erfindungsgemäßen Verfahrens sind Luftzerstäubungseinheiten mit einem Außenmischkopf oder solche Sprühvorrichtungen, bei denen die Zerstäubung des Materials durch Druckverdüsung und zusätzliche Druckluft bewerkstelligt wird (Kombination des Airless- mit dem Druckluftspritzen).

Die Düsengröße, der Materialdruck sowie der Luftdruck richten sich nach der Viskosität der zu versprühenden Trennmittel. Als Richtwerte können für den Düsendurchmesser 0,3 bis 1 mm, für den Materialdruck 0,5 bis 1 bar und für den Luftdruck 2 bis 4 bar angegeben werden, um Trennmittel mit Viskositäten zwischen 50 und 1000 cps handhaben zu können.

Im Unterschied zu den oben erläuterten spritz- und sprühtechnischen Verfahren und den dafür geeigneten Vorrichtungen kommt erfindungsgemäß allerdings hinzu, daß das Zerstäuben des Trennmittels unter Zuhilfenahme von heißen unter Druck stehenden Gasen, insbesondere heißer Druckluft, erfolgt, damit Wärme an das Trennmittel abgegeben wird. Dementsprechend ist es erforderlich, daß die Gas- bzw. Luft-Zuleitung mit einer Heizvorrichtung für das Gas bzw. die Luft versehen ist. Eine derartige Heizvorrichtung aufweisende Spritz- oder Sprühvorrichtungen sind jedoch bisher noch nicht vorgeschlagen worden.

Zum Aufheizen der Druckluft eignen sich Wärmeaustauscher oder entsprechend dimensionierte Durchlauferhitzer, welche ein genügend großes Reservoir haben müssen, um heiße Druckluft, vorzugsweise mit einer Temperatur von mindestens 80 °C und insbesondere mindestens 100 °C, mit dem oben angegebenen Druck kontinuierlich erzeugen zu können.

Eine besonders geeignete Vorrichtung zur Durchführung des erfindungsgemäßen Verfahrens, für die allerdings im Rahmen der vorliegenden Anmeldung kein Schutz begehrt wird, ist nachstehend unter Bezugnahme auf die Zeichnung erläutert. Es zeigen :

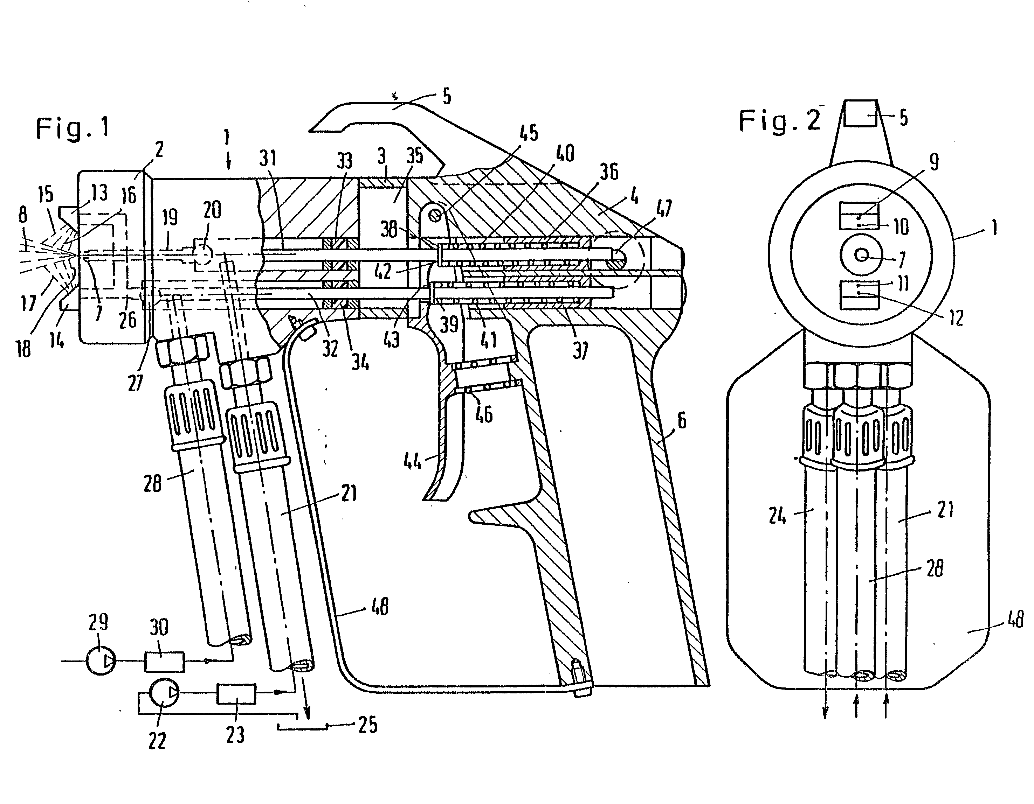

Fig. 1 eine Spritz- oder Sprühvorrichtung, teilweise im Längsschnitt, teilweise in Seitenansicht, teilweise schematisch sowie,

Fig. 2 eine Frontansicht der Vorrichtung nach Fig. 1.

Die Spritz- oder Sprühvorrichtung weist eine Pistole 1 mit einem Kopf 2 auf, der über ein Wärmeisolationselement 3 mit einem Gehäuse 4 verbunden ist. Dieses weist oben einen Haken 5 zum Anhängen der Pistole und unten eine Handhabe 6 in der Form eines Pistolengriffes auf, um die Pistole von Hand halten zu können. Im Kopf 2 befindet sich eine zentrische Zerstäuberdüse 7, über die hydrostatisch ein Sprühstrahl 8 abgegeben werden kann. Oberhalb und unterhalb davon sind je zwei schlitzartige Gasaustrittsöffnungen 9, 10 bzw. 11, 12 in vorstehenden Hörnern 13 und 14 vorgesehen, aus denen Gasschleier 15, 16, 17 bzw. 18 austreten, welche auf den Sprühstrahl 8 unmittelbar im Anschluß an den Zerstäubungsbereich auftreffen. Hierdurch wird der Sprühstrahl geformt.

Im Kopf befindet sich eine innere Trennmittel-Zuleitung 19, die zu der Zerstäuberdüse 7 führt und mittels eines Ventils 20 absperrbar ist. Diese innere Trennmittel-Zuleitung steht über eine am Umfang einmündende äußere Trennmittel-Zuleitung 21 mit einer Pumpe 22 und einer nachgeschalteten Trennmittel-Heizvorrichtung 23 in Verbindung. Nahe der Düse 7 zweigt von der inneren Zuleitung 19 eine nicht veranschaulichte innere Rückleitung ab, die mit einer ebenfalls am Umfang einmündenden äußeren Rückleitung 24 verbunden ist. Diese führt zu einem Behälter 25, aus dem die Pumpe 22 das Trennmittel ansaugt.

Die Gasaustrittsöffnungen 9 bis 12 stehen über eine innere Gas-Zuleitung 26 und ein Ventil 27 mit einer am äußeren Umfang des Kopfes 2 einmündenden äußeren Gas-Zuleitung 28 in Verbindung. Dieser wird das Gas durch einen Kompressor 29 über eine Gas-Heizvorrichtung 30 zugeführt. Normalerweise wird als Gas aus der Umgebung angesaugte und dann beheizte Luft verwendet. Die Einmündungsstelle der äußeren Gas-Zuleitung 28 befindet sich zwischen der äußeren Trennmittel-Zuleitung 21 und der Stirnseite des Kopfes 2.

Die beiden Ventile 20 und 27 werden über Ventilbetätigungsstangen 31 und 32 betätigt, die je eine Dichtung 33 bzw. 34 durchsetzen, durch den Innenraum 35 des Wärmeisolationselementes 3 hindurchgehen und am hinteren Ende in Buchse 36 bzw. 37 geführt sind. An den Ventilbetätigungsstangen befestigte Anschläge 38 bzw. 39 werden mit Hilfe von Federn 40 bzw. 41 gegen Nocken 42 und 43 eines Handbetätigungshebels 44 gehalten, der um eine im Gehäuse 4 gehaltene Schwenkachse 45 drehbar und von einer Feder 46 in seiner linken Endlage gehalten ist. Mittels eines Sperrelements 47 kann die Trennmittel- Ventilbetätigungsstange 31 arretiert und damit die Pistole gesichert werden. Zwischen dem Handbetätigungselement 44 und den äußeren Zuleitungen 21 und 28 befindet sich ein Schutzschild 48.

Die beiden Heizvorrichtungen 23 und 30 arbeiten vorzugsweise elektrisch und besitzen Einstelloder Regelmittel, um dem hindurchtretenden Trennmittel bzw. Gas eine vorgegebene Temperatur zu verleihen. Insbesondere kommt hierfür eine elektrische Beheizung mittels PTC-Widerständen in Betracht. Es können jedoch auch Heizvorrichtungen beliebiger anderer Art, beispielsweise Gas- order Ölheizungen verwendet werden. Die Trennmittel-Heizvorrichtung 23 ist fakultativ. Sie dient dazu, das Trennmittel zu erwärmen, aber höchstens auf eine Temperatur, die im zulässigen Temperaturbereich (keine Zerstörung der Trennmittelemulsion bzw. -dispersion bzw. kein Lösungsmittelverlust bei Verwendung eines Trennmittelkonzentrats) liegt. Wie bereits oben angegeben, beträgt die Gastemperatur vorzugsweise mindestens 80 °C und insbesondere mindestens 100 °C, z. B. 110 °C.

Wenn das Handbetätigungselement 44 nach rechts gezogen wird, öffnen das Gas-Ventil 27 und kurz darauf das Trennmittel-Ventil 20. Der Sprühstrahl 8 wird dann von dem heißen Gas aus den Schleiern 15 bis 18 beaufschlagt, so daß ein Teil der Gaswärme auf die Sprühtröpfchen übergeht. Die dabei möglicherweise auftretende Übertemperatur ist allenfalls ganz kurzzeitig vorhanden, weil die Zerstäubungströpfchen sich nur für Bruchteile einer Sekunde in dem Bereich des erwärmten Gases befinden und dessen Temperatur, sei es durch die Austritts-Entspannung, sei es durch das Einbeziehen von Raumluft, rasch absinkt. Erfindungsgemäß wesentlich ist aber, daß die Zerstäubungströpfchen auf jeden Fall eine Wärmebehandlung erfahren haben, die im Vergleich zum Stand der Technik dazu führt, daß die Tröpfchen mit höherer Temperatur und geringerer Viskosität auf der zu beschichtenden Fläche auftreffen.

Die Anordnung der äußeren Gas-Zuleitung 28 nahe der Frontseite des Kopfes 2 sorgt dafür, daß die von heißem Gas durchströmten Teile der inneren Gas-Zuleitung 27 verhältnismäßig kurz sind, so daß der Kopf 2 durch das Gas möglichst wenig erwärmt wird und daher auch keine hohen Temperaturen auf das zu zerstäubende Trennmittel im Innern des Kopfes übertragen kann. Außerdem ist das Trennmittel dauernd über die Zuleitung 21 und die Rückleitung 24 in Zirkulation, so daß auch mangels Stagnation keine Überhitzung erfolgen kann.

Damit der heiße Kopf 2 das Anfassen und Betätigen der Pistole 1 nicht beeinträchtigt, ist das Wärmeisolationselement 3 vorgesehen. Das Schutzschild 48 schirmt die Hand vor Wärmestrahlung der Zuleitungen 21 und 28 ab.

Hinsichtlich der beim erfindungsgemäßen Verfahren verwendbaren wässrigen Trennmittel bestehen keine Beschränkungen, d. h. sie liegen in Form von Emulsionen bzw. Dispersionen vor und enthalten übliche trennwirksame Substanzen als Festkörper (siehe oben), die in die wässrige Basis eingearbeitet werden. Dies erfolgt nach den in der Emulsions- und Dispersionstechnik üblichen Verfahren (vergleiche zum Beispiel Seifen-Öle-Fette-Wachse, 107. Jahrgang, Nr. 14, 1981, Seiten 391 bis 402). In der Regel wird das Wasser oder zumindest ein Teil des Wassers vorgelegt und dann werden die verschiedenen trennwirksamen Substanzen sowie ggf. übliche Zusätze (beispielsweise Beschleuniger wie Zinn- und Aminbeschleuniger) zu diesen Substanzen eingearbeitet, wobei erforderlichenfalls Emulgatoren verwendet werden können. Die Reihenfolge der Einarbeitung der trennwirksamen Substanzen kann beliebig gewählt werden. Außerdem können selbstverständlich zur Erleichterung des Emulgiervorganges auch erhöhte Temperaturen angewandt werden. Nähere Erläuterungen hierzu sind nicht erforderlich, da der Fachmann in der Lage ist, die Zusammensetzung des Trennmittels entsprechend den jeweiligen Anforderungen zu konzipieren und die jeweils günstigste Verfahrensweise für die Herstellung des so konzipierten Trennmittels zu wählen.

Beispiel

Eine für die Herstellung von Polyurethan-Kaltweichschaumteilen vorgesehene Aluminiumform wurde bei einer Formentemperatur von 53 °C ± 2 °C mit einer wässrigen lösungsmittelfreien Trennemulsion behandelt, wobei unter Konstanthaltung aller übrigen Parameter die Zeit zwischen Trennmittelauftrag und Eintrag der schaumbildenden Komponenten variiert wurde. Der Trennmittelauftrag erfolgte mit einer konventionellen, nach dem Prinzip der Luftzerstäubung arbeitenden Spritzpistole mit Außenmischkopf. Der Düsendurchmesser betrug 0,33 mm, der Luftdruck 3,00 bar und der Materialdruck 1,00 bar. Zur Erzeugung der heißen Druckluft wurden in Serie geschaltete Durchlauferhitzer benutzt, welche einen kontinuierlichen Fluß von etwa 100 °C heißer Druckluft bei den zuvor genannten Düsendimensionen gestatteten. Die Temperatur der nach dem Mischkopf expandierenden Luft lag bedingt durch Drosseleffekte bei etwa 40 °C.

Die verwendete Trennemulsion bestand aus 3,6 Gew.% emulgatorhaltigem Mikrowachs mit einem Schmelzbereich von 70 bis 95 °C, 0,4 Gew.%

Fettalkoholpolyglykolether-Gemisch, 1,1 Gew.% Siliconglykolen, 0,7 Gew.% Siliconstabilisatoren, 0,1 Gew.% Beschleuniger, 0,5 Gew.% fluorierten Polymeren und 93,6 Gew.% Wasser. Bei allen Bestandteilen handelte es sich um handelsübliche für die Formulierung von Formtrennmitteln gebräuchliche Substanzen.

Als Beurteilungskriterien dienten die Oberflächenbeschaffenheit der geschäumten Teile sowie deren Entformbarkeit. Bei Verwendung von Druckluft mit einer Temperatur von 20 °C erwies sich eine Ablüftezeit von 45 Sek. als ausreichend, um fehlerlose Schaumteile zu erhalten. Die Entformung konnte als gut bezeichnet werden. Wurde jedoch die Ablüftezeit von 45 Sek. unterschritten, kam es speziell in Kantenzonen zu Blasenbildungen im Oberflächenbereich des Schaums, die ab 30 Sek. Ablüftezeit in großflächige Schaumstörungen (Blasen- und Hautbildung) übergingen.

Bei Verwendung von Druckluft mit einer Temperatur von 100 °C wurden auch noch bei Ablüftezeiten von weniger als 10 Sek. fehlerfreie Schaumteile erhalten. Die Entformung gestaltete sich im Vergleich zu den Versuchen mit 20 °C warmer Druckluft leichter.

Wenngleich heiße Druckluft in der Regel bevorzugt sein dürfte, kann der Einsatz anderer aufgeheizter, unter Druck stehender Gase unter bestimmten Umständen Vorteile bieten oder sogar erforderlich sein. So können bei Verwendung von brennbaren Trennmittelkonzentraten inerte Gase wie Stickstoff oder Kohlendioxid die Brand- oder Explosionsgefahr aufheben. Angesichts der allgemeinen Bestrebungen, Trennmittel auf wässriger Basis herzustellen, sowie angesichts des hohen Kostenaufwands, der mit der Verwendung anderer Gase verbunden ist, ist allerdings davon auszugehen, daß in der überwiegenden Mehrzahl der Fälle heiße Druckluft zum Einsatz kommt.

**Patentansprüche**

1. Verfahren zum Herstellen von Gegenständen aus Polyurethanschaum, bei dem der Gegenstand durch Schäumen in einer Form hergestellt und auf die Formoberfläche vor der Beschickung mit den schaumbildenden Komponenten ein Trennmittel durch Zerstäuben aufgebracht wird, dadurch gekennzeichnet, daß ein wässriges Trennmittel oder ein organische Lösungsmittel enthaltendes Trennmittelkonzentrat verwendet wird, das unter Zuhilfenahme von heißen unter Druck stehenden Gasen auf die Formoberfläche aufgebracht wird.

2. Verfahren nach Anspruch 1, dadurch gekennzeichnet, daß das heiße unter Druck stehende Gas Druckluft ist.

3. Verfahren nach Anspruch 1 oder 2, dadurch gekennzeichnet, daß das Trennmittel mit einer Luftzerstäubungsvorrichtung aufgebracht wird.

4. Verfahren nach Anspruch 2 oder 3, dadurch gekennzeichnet, daß Druckluft mit einer Temperatur von mindestens 100 °C verwendet wird.

5. Verfahren nach einem der Ansprüche 1 bis 4, dadurch gekennzeichnet, daß das verwendete wässrige Trennmittel oder organische Lösungsmittel enthaltende Trennmittelkonzentrat ebenfalls erwärmt wird.

## Claims

1. Process for producing polyurethane foam articles, in which the article is produced by foaming in a mold and a release agent is applied to the mold surface by spraying prior to filling with the foam-producing components, characterized in that an aqueous release agent or a release agent concentrate containing an organic solvent is used, which is applied to the mold surface with the aid of hot, pressurized gases.

2. Process according to claim 1, characterized in that the hot, pressurized gas is compressed air.

3. Process according to claim 1 or 2, characterized in that the release agent is applied by an air atomizer.

4. Process according to claim 2 or 3, characterized in that compressed air at a temperature of at least 100 °C is used.

5. Process according to any of claims 1 to 4, characterized in that the used aqueous release agent or the release agent concentrate containing organic solvent is also heated.

## Revendications

1. Procédé pour la fabrication d'objets en mousse de polyuréthane selon lequel l'objet est fabriqué dans un moule par moussage et un agent de démoulage est appliqué par pulvérisation sur la surface du moule avant l'introduction des constituants formateurs de mousse, caractérisé en ce qu'un agent de démoulage aqueux où un concentré d'agent de démoulage contenant des solvants organiques est utilisé, lequel est appliqué sur la surface du moule à l'aide de gaz sous pression chauds.

2. Procédé selon la revendication 1, caractérisé en ce que le gaz sous pression chaud est de l'air comprimé.

3. Procédé selon la revendication 1 ou 2, caractérisé en ce que l'agent de démoulage est appliqué avec un dispositif de pulvérisation à l'air.

4. Procédé selon la revendication 2 ou 3, caractérisé en ce que l'air comprimé est utilisé à une température d'au moins 100 °C.

5. Procédé selon l'une des revendications 1 à 4, caractérisé en ce que l'agent de démoulage aqueux où le concentré d'agent de démoulage contenant des solvants organiques utilisés est lui-même chauffé.

Fig.1

Fig.2

0 188 219